# EUROPÄISCHE PATENTSCHRIFT

(11) **EP 0 501 287 B1**
(45) Veröffentlichungstag und Bekanntmachung des Hinweises auf die Patenterteilung: **14.09.1994**
(21) Anmeldenummer: 92102712.4
(22) Anmeldetag: 19.02.1992
(51) Int. Cl.: B60R 21/26

(54) **Schutzeinrichtung für Insassen eines Kraftfahrzeuges**
Protection device for automotive vehicle occupants
Dispositif de protection pour occupants d'un véhicule automobile

(30) Priorität: 23.02.1991 DE 4105788; 18.12.1991 DE 4141835
(43) Veröffentlichungstag der Anmeldung: 02.09.1992
(73) Patentinhaber: MERCEDES-BENZ AG, 70327 Stuttgart (DE)
(72) Erfinder: Münzel, Wolf-Dietrich, Dr.-Ing., W-7031 Altdorf (DE); Delonge-Immik, Gudrun, Dipl.-Ing., W-7014 Kornwestheim (DE); Henseler, Wolfgang, Dipl.-Ing., W-7400 Tübingen (DE); Knoll, Heinz, Dipl.-Ing., W-7000 Stuttgart 80 (DE); Peitsmeier, Karl, Dipl.-Ing., W-7148 Remseck-Aldingen (DE); Patzelt, Helmut, Ing., W-7053 Kernen (DE)

(56) Entgegenhaltungen:
- DE-A- 2 118 745
- FR-A- 2 243 843
- US-A- 3 960 390

## Beschreibung

Die Erfindung betrifft eine Schutzeinrichtung für die Insassen eines Kraftfahrzeuges, insbesondere eines Personenkraftwagens, mit einem zur Speicherung eines unter Druck stehenden Gases dienenden Druckbehälter, der über eine in der Druckbehälterwandung vorgesehene Ausströmöffnung mit dem Innenraum eines durch das Gas aufblasbaren Sackes verbunden ist und aus an ein rohrförmiges Mittelstück angesetzten Behälterschalen besteht, wobei die Ausströmöffnung über wenigstens ein Ventil verschließbar ist, das aus einem von einer Sollbruchstelle umgebenen Wandungsstück des Druckbehälters und aus einer mit diesem Wandungsstück in Wirkverbindung stehenden Kolbenstange besteht, die aus einem geschlossenen und mit einem pyrotechnischen Medium gefüllten Auslösezylinder einseitig herausragt und durch einen im Auslösezylinder angeordneten Kolben axial aus einer ersten in eine zweite Endlage verschiebbar ist, wenn die Zündung des pyrotechnischen Mediums erfolgt.

Es ist ein Air-Bag-System, aus der DE-A-2 118 745 bekannt. Bei dieser Schutzeinrichtung ist ein dosenförmiger, im wesentlichen zylindrischer Behälter vorgesehen, der in seinem Inneren und koaxial zu seiner Mittellängsachse einen mit pyrotechnischen Material gefüllten Zylinder aufweist, in dem ein fest mit einer einseitig aus dem Zylinder herausragenden Kolbenstange verbundener Kolben so sitzt, daß er in der ersten Endstellung der Kolbenstange, also bei nichtausgelöstem Air- Bag-System, noch eine bestimmte Wegstrecke bis zum stirnseitigen Anschlag an dem Zylinder zurücklegen kann. Das von dem Kolben abgewandte Ende der Kolbenstange liegt senkrecht an einem plattenartigen Wandungsteil des zylindrischen Behälters an, das von einer Sollbruchstelle umgeben ist. Erfolgt daher eine Zündung in dem dort vorgesehenen Auslösezylinder, so wird die Kolbenstange von dem unter Druck geratenden Kolben schlagartig gegen das Wandungsteil gedrückt, das an seinen Sollbruchstellen herausbricht und das Einströmen des im Druckbehälter befindlichen Gas in den aufblasbaren Sack bewirkt. Um ein zu schlagartiges Eintreten des Druckgases in den Sack zu vermeiden, ist der zylindrische Behälter von einem zweiten Behälter umgeben, der mit einem in der Richtung der Achse der Kolbenstange verschiebbar geführten und den Behälter überdeckenden Deckel versehen ist, der auf seinem gesamten Umfang mit Austrittslöchern für das austretende Druckgas versehen ist. Diese Bauart weist den Vorteil auf, daß das durch das schlagartige Aufbrechen des Wandungsteiles aus dem Druckbehälter ausströmende Druckgas gedrosselt und verteilt wird. Der als Verteiler wirkende, teleskopartig an dem Innenbehälter und am Außenbehälter geführte Deckel kann aber im Ernstfall verklemmen.

Eine Schutzeinrichtung der eingangs genannten Art ist aus der US-A 3 960 390 bekannt, bei der der Druckbehälter aus ringförmig um ein rohrförmiges Mittelstück herum angeordneten und dicht zusammengefügten Ringschalen besteht. Das Mittelstück nimmt den mit pyrotechnischem Material gefüllten Auslösezylinder und eine koaxial geführte Kolbenstange auf, die an einer geschlossenen Stirnseite des Mittelstückes an einem von einer Sollbruchstelle umgebenen Wandungsstück anliegt, das mit der Kolbenstange somit ein plattenartiges Ventil bildet. In einen an dieses Wandstück angrenzenden Raum münden Verbindungsöffnungen, die in der zylindrischen Wand des Mittelstückes angeordnetsind. Erfolgt daher die Zündung des pyrotechnischen Materials, so wird die Kolbenstange axial im Mittelstück verschoben und drückt das Wandungsstück schlagartig aus seinen Sollbruchstellen heraus. Ähnlich wie bei dem vorher beschriebenen Air-Bag-System ist eine Abdeckung mit am Umfang verteilten Austrittsöffnungen vorgesehen, um eine gewisse Drosselung des schlagartig ausströmenden Druckgases zu erreichen. Eine Möglichkeit, die austretende Mange des Druckgases zeitlich zu verändern, besteht bei diesen Schutzeinrichtungen nicht.

Andere Schutzeinrichtungen, wie sie beispielsweise aus der DE-A-2 305 908 bekannt sind, besitzen ähnliche plattenartige Ventile, die bei der Zündung einer Treibladung an der Stirnseite des Druckbehälters abgesprengt werden. Es sind auch Druckbehälter (DE-A-1 781 383) bekannt, die quer zur Fahrtrichtung des Fahrzeuges in einer länglichen Ausnehmung im Armaturenbrett des Fahrzeuges angeordnet werden können. Diese Druckbehälter sind konzentrisch von einem mit einer horizontalen schlitzartigen Auslaßöffnung versehenen Außenbehälter umgeben und werden durch die Explosion einer Sprengladung entlang einer horizontalen Sollbruchlinie über ihre gesamte Länge aufgerissen. In allen diesen Fällen tritt ein unkontrolliertes Aufblasen des dem Fahrer oder dem Beifahrer zugewandten Prallsackes auf, das unerwünscht ist.

Der Erfindung liegt daher die Aufgabe zugrunde, eine Schutzeinrichtung der eingangs genannten Art so auszubilden, daß das unerwünschte schlagartige Austreten des Druckgases in den Luftsack vermieden wird.

Dies wird bei einer Schutzeinrichtung der eingangs genannten Art dadurch erreicht, daß das rohrförmige Mittelstück als ein hohler Ventilblock ausgebildet ist, der mit der Ausströmöffnung versehen ist, daß das Wandungsstück Teil der Wandung des Ventilblockes und mit einem in das Innere des Ventilblockes ragenden Ansatz versehen ist, daß die Kolbenstange quer zu dem Ansatz im Ventilblock verschiebbar ist, und daß der Ansatz in der Bewegungsbahn der Kolbenstange liegt.

Durch diese Ausgestaltung wird das Wandungsstück nicht senkrecht zu der Ebene herausgerissen, in der seine Sollbruchstellen liegen, sondern zu dieser Ebene verschwenkt, wobei sich das Wandungsstück klappenartig um zunächst verbleibende Verbindungsstellen verschwenkt, ehe es von der Kraft des ausströmenden Druckgases ganz herausgerissen werden kann. Es entstehen daher bei der Axialverschiebung der Kolbenstange zunächst sichelartige Öffnungen an zwei gegenüberliegenden Seiten des sich lösenden Wandungsstückes, die immer größer werden, bis die gesamte Ventilöffnung freigegeben ist. Es wird dadurch möglich, die Menge des ausströmenden Druckgases zu steuern und in der Anfangsphase verhältnismäßig klein zu halten, ehe die gesamte zur Verfügung stehende Druckgasmenge schlagartig ausströmt. Diese Ausgestaltung ermöglicht daher das einwandfreie und störungsfreie Entfalten des zunächst zusammengelegten Prallsackes, ohne daß eine Behinderung durch ein Verklemmen mechanisch geführter Teile befürchtet zu werden braucht. Die neue Ausgestaltung macht es auch möglich, eine S-schlagförmige Kennlinie für die Ausströmung zu erreichen.

Besonders vorteilhaft ist es nach Anspruch 2 für Schutzeinrichtungen der eingangs genannten Art, bei denen die Ausströmöffnung von einem kappenartigen und wiederum mit Ausströmöffnungen versehenen Deckel überdeckt ist, wenn die Kolbenstange an ihrem von dem Betätigungskolben abgewandten Ende mit dem radial von ihr abstehenden kappenartigen Deckel versehen ist. Bei einer solchen Ausführung wird der Deckel unmittelbar von der Kolbenstange und damit störungsfrei von der Ausströmöffnung abgehoben, kann den Prallsack parallel zu der mit der Betätigung der Kolbenstange ausströmenden Druckgasmenge auch mechanisch um einen gewissen Betrag entfalten und als eine Art Leitschaufel für das austretende Druckgas dienen, das dadurch gezielt umgelenkt und diffusorartig in den Prallsack eintreten kann.

Nach Anspruch 4 kann der Deckel mit einem parallel zu der Achse der Kolbenstange verlaufenden Rand versehen sein, der in der Art eines Kolbens dicht in einer zylindrischen Ausnehmung des Ventilblockes gehalten ist, solange die Kolbenstange in der ersten Endlage steht. Diese Ausgestaltung ermöglicht eine kompakte und stabile geschlossene Bauweise der gesamten Schutzeinrichtung, die im nicht betätigten Zustand gegen Außeneinflüsse, insbesondere gegen eine mögliche Verschmutzung geschützt ist. Bei einer solchen Ausführungsform können nach Anspruch 5 die Ausströmöffnungen des Deckels ausschließlich in dessen Rand vorgesehen sein, so daß die gewünschte Umlenkung der austretenden Druckgasmenge erreicht und das unerwünschte Vorschnellen des zentralen Prallsackbereiches in Richtung auf die zu schützende Person vermieden wird. Nach Anspruch 6 können diese Ausströmöffnungen auch als von dem freien Rand des Randes aus zum geschlossenen Deckelteil hin verlaufende Schlitze ausgebildet sein, die nach Anspruch 7 an ihrer geschlossenen Seite eine kreisförmige Abrundung aufweisen. Durch diese Ausgestaltung kann der Effekt einer Drosselung der in den ersten Millisekunden ausströmenden Druckgasmenge noch unterstützt werden, weil die Druckgasmenge noch nicht durch den vollen Querschnitt der Ausströmschlitze austreten kann. Um eine möglichst gleichmäßige Verteilung des austretenden Druckgases aus diesen Ausströmschlitzen zu erreichen, kann an der freien umlaufenden Kante des Randes eine Lochplatte befestigt sein, die eine zentrale Ausnehmung für die Kolbenstange aufweist.

Die Länge des Randes kann nach Anspruch 9, parallel zur Kolbenstange gemessen, so ausgelegt werden, daß sie dem Verstellweg der Kolbenstange aus der ersten in die zweite Endlage entspricht. Bei einer solchen Auslegung ist der Deckel bei ausgefahrener Kolbenstange mit seinem Rand auch vollständig aus der Führung ausgetreten, so daß neben den Ausströmschlitzen auch noch ein Ringbereich für das ausströmende Druckgas zur Verfügung gestellt werden kann, wenn das erforderlich ist.

Eine besonders vorteilhafte Ausführungsform ergibt sich, wenn im Ventilblock zwei diametral gegenüberliegende Wandungsteile mit fluchtend zueinander angeordneten Ansätzen vorgesehen sind, deren freie Stirnseiten in einem Abstand zueinander stehen, der etwas größer als der Durchmesser der Kolbenstange ist. Bei einer solchen Ausführung wird es möglich, den maximal möglichen Hebelarm für das Verschwenken der Wandungsstücke zur Verfügung zu stellen, ohne daß der Raumbedarf zu groß wird.

Nach Anspruch 11 kann jeweils angrenzend an jedes Wandungsteil ein hülsenförmiger Druckbehälter angeschlossen sein, der durch die Wandung des Ventilblockes abgeschlossen ist. Es entsteht dann insgesamt ein länglicher, etwa zylindrischer Behälter, der zentral in seiner Mitte die Austrittsöffnung mit dem an der Kolbenstange angebrachten Diffusordeckel aufweist. Solche Ausführungsformen eignen sich besonders zur Betätigung des Prallsackes für den Beifahrer, weil sie wegen ihrer Abmessungen ohne weiteres auch noch oberhalb des dort im allgemeinen anzuordnenden Handschuhfaches im Armaturenbrett unterbringbar sind.

Nach Anspruch 13 kann der Ventilblock aber auch von einem reifenförmigen Druckbehälter umgeben sein, der konzentrisch zum Ventilblock angeordnet und auf seiner offenen Innenseite durch eine zylindrische Wand des Ventilblockes geschlossen ist. Auch bei dieser Ausführungsform ergibt sich eine kompakte Bauart, die aber wegen ihrer Abmessungen mehr zur Unterbringung im Mittelteil des Lenkrades, also zum Einsatz als Prallsack für den Fahrer, geeignet ist.

Bei beiden Ausführungsformen können mindestens die an den Ventilblock angesetzten Druckbehälter aus einem dünnwandigen Material bestehen, das außen durch eine die Druckbehälter einhüllende Faserverbundwicklung verstärkt ist, wie das im Anspruch 14 zum Ausdruck gebracht wird. Der Ventilblock selbst kann nach Anspruch 15 aus einem geschmiedeten Hohlprofil mit dickerer Wandstärke als das Material der Druckbehälter hergestellt sein. Es hat sich insbesondere Aluminium oder Aluminiumlegierungen hierfür als besonders vorteilhaft erwiesen, weil das Gesamtgewicht der Schutzeinrichtung auf diese Weise niedrig gehalten werden kann. Dieser Ventilblock kann neben den Ausströmöffnungen auch andere Funktionselemente entnehmen. Er läßt sich gasdicht mit den Druckbehälterteilen verschweißen.

Nach den Ansprüchen 16 und 17 schließlich kann in den massiv ausgebildeten Ventilblock sowohl eine druck- und gasdicht verschließbare Befüllöffnung, als auch ein Sicherheitsventil vorgesehen sein, und es kann dem oder den Druckbehältern ein Drucksensor zur ständigen Erfassung des in den Druckbehältern herrschenden Druckes zugeordnet sein, der entweder an der Wandung der Druckbehälter oder direkt an einer Wandung des Ventilblockes angebracht ist.

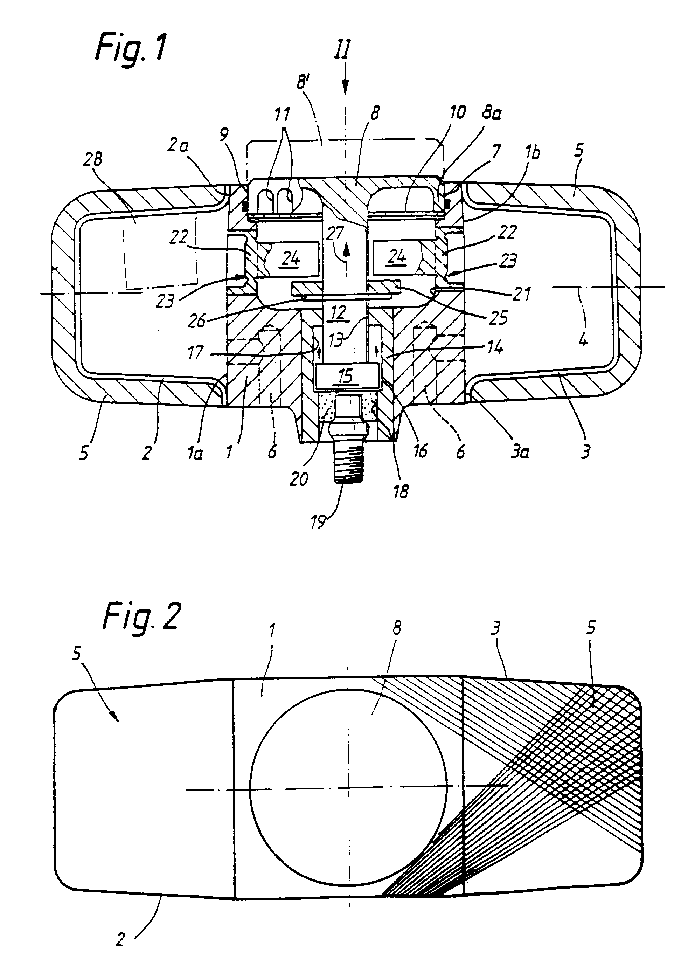

Die Merkmale der Ansprüche 19 bis 24 umreißen vorteilhafte Varianten einer Ausführungsform mit zylindrischen Druckbehältern ähnlich der Bauart nach Fig. 1.

Die Erfindung ist anhand von Ausführungsbeispielen in der Zeichnung dargestellt und wird im folgenden erläutert. Es zeigen:
- Fig. 1: einen Längsschnitt durch eine erfindungsgemäße Schutzeinrichtung in Form einer im wesentlichen zylindrischen Einheit, deren Länge größer als der Durchmesser ist und die mit einem Umlenkdeckel für die ausströmenden Gase versehen ist,
- Fig. 2: die Draufsicht auf die Schutzeinrichtung der Fig. 1 in Richtung des Pfeiles II gesehen,
- Fig. 3: eine andere Ausführungsform einer Schutzeinrichtung nach der Erfindung, die ebenfalls zwar im wesentlichen die Form eines Zylinders aufweist, wobei in diesem Fall aber der Durchmesser des Zylinders wesentlich größer als seine Längserstreckung ist, und
- Fig. 4: die Draufsicht auf die Schutzeinrichtung der Fig. 3 in Richtung des Pfeiles IV der Fig. 3 gesehen,
- Fig. 5: einen Druckbehälter einer Schutzeinrichtung der - wie die Ausführung der Fig. 1 - für eine Anordnung im Bereich der Armaturentafel oberhalb eines Handschuhfachs vor einem Beifahrersitz eines Personenkraftwagens geeignet ist, jedoch ohne einen Umlenkdeckel für das ausströmende Gas,
- Fig. 6: einen Schnitt durch den Ventilblock des Druckbehälters nach Fig. 5 entlang der Linie VI-VI in Fig. 5, wobei über den Umfang des Ventilblocks verteilt vier Anschlüsse für Funktionselemente angeordnet sind,
- Fig. 7: einen Schnitt durch eine andere Ausführungsform eines Ventilblocks ähnlich Fig. 6 und
- Fig. 8: in vergrößerter Darstellung einen Ausschnitt des Ventilblocks nach Fig. 6, in dem ein in eine Auslaßöffnung eingeschweißtes Ausströmventil dargestellt ist, das mit einen in den Druckbehälter hineinragenden Ventilschaft versehen ist.

In den Fig. 1 und 2 sind zu beiden Seiten eines zentralen Ventilblockes (1) zwei hülsenförmige Druckbehälter (2 und 3) angeordnet, die jeweils aus einem Aluminuim- oder Aluminiumlegierungsblech bestehen, an ihrer offenen Seite einen Befestigungsflansch (2a bzw. 3a) aufweisen und mit diesem Flansch dicht mit der zugeordneten Wandung (1a bzw. 1b) des Ventilblockes (1) verschweißt sind. Die Druckbehälter (2 und 3) bestehen aus Hülsen, die rotationssymmetrisch zu einer Mittellängsachse (4) ausgebildet sind. Der Ventilblock (1) grenzt mit seinen kreisförmigen Wandungen (1a und 1b), die im wesentlichen den gleichen Durchmesser wie die Flansche (2a bzw. 3a) aufweisen, an diese Druckbehälter (2 und 3) an. Zumindest die beiden Druckbehälter (2 und 3) sind an ihrem äußeren Umfang mit einer Faserverstärkung in der Form einer Faserverbundwicklung (5) versehen, die sich bei Bedarf aber auch, wie aus Fig. 2 entnommen werden kann, zumindest zum Teil in den Bereich des Ventilblockes (1) herein erstrecken kann. Es reicht aber auch aus, ausschließlich die Außenflächen der beiden Druckbehälter (2 oder 3) mit einer Faserverbundwicklung zu versehen, die den an sich dünnwandigen und daher leichten Druckbehältern (2 und 3) die ausreichende Festigkeit für die Aufnahme eines Druckgases verleihen, das jeweils über ein Füllventil (6), das im Ventilblock (1) angeordnet ist, nach der Fertigstellung der Druckbehältereinheit in die Druckbehälter (2 bzw. 3) eingefüllt wird. Die Füllventile (6) werden anschließend druck- und gasdicht so verschweißt, daß der Druck des gasförmigen Mediums in den Druckbehältern (2 und 3), der in der Größenordnung von 500 bar liegen kann, auch über längere Zeit, insbesondere über die gesamte Lebensdauer der später in ein Kraftfahrzeug eingebauten Schutzeinrichtung aufrecht erhalten werden kann.

Der Ventilblock (1) besteht aus einem geschmiedeten Aluminium- oder Aluminiumlegierungshohlprofil und besitzt an einer Seite einen Ansatz mit einer zylindrischen Ausnehmung (7), in der ein Deckel (8) aufgenommen ist, der mit einem umlaufenden Rand (8a) versehen ist, der mit seinem zylindrischen Umfang in der Ausnehmung (7) sitzt und durch einen O-Ring (9) in dieser Ausnehmung (7) abgedichtet gehalten ist. An der unteren freien Stirnseite des Randes (8a) ist eine Lochblechscheibe (10) befestigt. In den umlaufenden Rand (8a) sind von der freien Stirnseite her schlitzartige Austrittsöffnungen (11) eingearbeitet, die an ihrer geschlossenen Seite abgerundet sind und damit eine torbogenähnliche Gestalt erhalten. Diese schlitzartigen Austrittsöffnungen (11) sind über den gesamten Umfang des Randes (8a) gleichmäßig verteilt.

Der Deckel (8) ist beim gezeigten Ausführungsbeispiel einstückig mit einer Kolbenstange (12) ausgebildet, die über einen O-Ring (13) abgedichtet aus dem oberen Ende eines in sich geschlossenen Zylinders (14) herausragt. In dem innerhalb des Zylinders (14) verlaufenden Bereich besitzt die Kolbenstange (12) eine Erweiterung in der Form eines Kolben (15), der ebenfalls mit Hilfe eines O-Ringes (16) abgedichtet in einem ersten zylindrischen Bereich (17) innerhalb des Zylinders (14) geführt werden kann.

Unterhalb von dem Kolben (15) befindet sich ein weiterer zylindrischer Raum (18) mit etwas kleinerem Durchmesser als der Zylinderraum (17). Dieser Zylinderraum (18) ist nach unten durch einen Zünder (19) abgeschlossen, der in den Raum (18) hereinragt. Der Zylinderraum (18) ist im übrigen mit einem pyrotechnischen Material (20) gefüllt, das bei einer Zündung zu einer schlagartigen Volumenvergrößerung führt.

In dem Bereich zwischen Deckel (8) und dem Zylinder (14) befindet sich anschließend an die Ausnehmung (7) eine ebenfalls im wesentlichen zylindrische Ausnehmung (21), die an den Wandungsteilen (1a und 1b) des Ventilblockes (1) durch Wandungsstücke (22) abgeschlossen ist, die jeweils die Form von kreisförmigen Platten besitzt, die durch eine umlaufende Sollbruchstelle (23) gegenüber den angrenzenden Wandteilen abgegrenzt sind. Von den plattenförmigen Wandungsstücken (22) aus ragen bolzenartige Ansatzstücke (24) in den Raum (21) herein und enden mit ihren freien Stirnseiten jeweils im Abstand zu der Kolbenstange (12). Die Kolbenstange (12) ihrerseits ist mit einem Kragen in der Form einer Mitnehmerscheibe (25) versehen, die in bekannter Weise durch einen Sicherungsring (26) in ihrer Lage gehalten werden kann.

Nicht dargestellt ist in den Fig. 1 und 2 der bei Betätigung der Einrichtung der Fig. 1 und 2 durch das austretende Druckgas aufblasbare Prallsack. Dieser Prallsack schließt sich aber in an sich bekannter Weise an die Ausnehmung (7) an und er liegt im Ausgangszustand in zusammengefalteter Form mit einer Einlaßöffnung dicht am Außenrand der Ausnehmung (7) auf. Die gesamte Schutzeinrichtung einschließlich dem Prallsack wird dann am Armaturenbrett des Fahrzeuges, beispielsweise oberhalb des Handschuhfaches und vor dem Beifahrer durch nicht näher gezeigte Befestigungsarme angebracht.

Die neue Schutzeinrichtung arbeitet wie folgt:
Tritt, beispielsweise ausgelöst durch einen Unfall, eine Verzögerung des Fahrzeuges auf, die größer als ein vorbestimmtes Maß ist, dann wird der Zünder (19) ausgelöst. Das im zylindrischen Raum (18) befindliche pyrotechnische Material wird gezündet, expandiert schlagartig und drückt den Kolben (15) zusammen mit der Kolbenstange (12) in Richtung des Pfeiles (27) nach oben. Die Kolbenstange (12) wird daher aus der in der Fig. 1 gezeigten ersten Endlage in eine zweite Endlage axial verschoben, in der der Kolben (15) am oberen Ende des zylindrischen Raumes (17) anschlägt. Der mit der Kolbenstange (12) fest verbundene Deckel (8) nimmt dann die Lage (8') ein.

Ehe diese zweite Endlage der Kolbenstange (12) aber erreicht ist, schlägt die Mitnehmerscheibe (25) an den beiden bolzenartigen Ansätzen (24) an und schwenkt diese unter der Kraft des expandierenden pyrotechnischen Materiales (20) im Gegenuhrzeiger- bzw. im Uhrzeigersinn in Richtung zu der Ausnehmung (7). Bedingt durch den Angriff der Mitnehmerscheibe (25) an den hebelarmartig wirkenden Bolzen (24) bricht die Sollbruchstelle (23) am Umfang der plattenartigen Wandungsteile (22) auf, und zwar zunächst in den parallel zu der Verstellrichtung (27) liegenden oberen und unteren Bereichen der Wandungstücke (22), so daß parallel zu der Bewegungsrichtung (27) diametral gegenüberliegende, sichelartige Bruchstellen an den Wandungsstücken (22) entstehen, die bei fortschreitender Verschiebung der Kolbenstange (12) immer größer werden, ehe sie ineinander übergehen und die Wandungsstücke (22) vollkommen herausgebrochen sind. Bis dies geschieht, werden die Wandungsstücke (22) klappenartig um die senkrecht zur Verschieberichtung (27) liegenden verbleibenden Verbindungsstücke im Bereich der Sollbruchstelle herumgeschwenkt. Dies bewirkt ein gesteuertes Austreten des unter hohem Druck in den beiden Behältern (2 und 3) befindlichen Gases. Das Gas tritt daher nicht bei der Zündung des pyrotechnischen Materiales (20) schlagartig aus und in den gefalteten Prallsack ein, was zu Nachteilen bei der Auffaltung und im Verhalten des Prallsackes führen könnte. Das Druckgas tritt vielmehr zunächst gedrosselt in kleinerer und dann in immer größer werdender Menge aus. Da gleichzeitig mit diesem Ausströmvorgang sich auch der Deckel (8) aus seiner Ausgangslage in die Endlage (8') bewegt, gelangen auch die schlitzartigen Öffnungen (11) erst nach und nach über den oberen Rand der Ausnehmung (7) hinaus und geben auch erst nach und nach die volle Ausströmöffnung frei. Dabei wirkt sich die bogenartige Ausgestaltung der schlitzartigen Öffnungen vorteilhaft aus. Die Ausgestaltung muß dabei so getroffen werden, daß zumindest ein Teil des abgerundeten Endes der schlitzartigen Öffnungen (11) über den oberen Rand der Ausnehmung (7) ausgetreten ist, wenn der Schwenkvorgang und das Aufreißen der Sollbruchstellen (23) der Wandungsstücke (22) einsetzt.

Der Deckel (8) wirkt dabei zum einen als Umlenkmittel für das austretende Druckgas und sorgt dafür, daß das einströmende Gas in die Bereiche gelenkt wird, die zu einem ordnungsgemäßen und schnellen Aufblasen des Prallsackes vorgesehen sind. Der Deckel (8) leitet aber selbst bereits die Auffaltung des Prallsackes ein, indem er mechanisch den mittleren Bereich des Prallsackes von dem oberen Rand der Ausnehmung (7) abhebt. Es hat sich gezeigt, daß mit einer solchen Schutzeinrichtung das erstrebte exakte aber schnelle Aufblasen den Prallsackes erreicht werden kann. Die Lochblende (10) an der Unterseite des Deckels (8) trägt mit zu einer gleichmäßigen Verteilung des austretenden Druckgases bei.

Aus Fig. 1 ist schließlich noch erkennbar, daß in dem Druckbehälter (2) ein Drucksensor (28) untergebracht ist, der dazu dient, Informationen über den im Inneren des Druckbehälters herrschenden Druck über die gesamte Lebensdauer der Schutzeinrichtung zu geben.

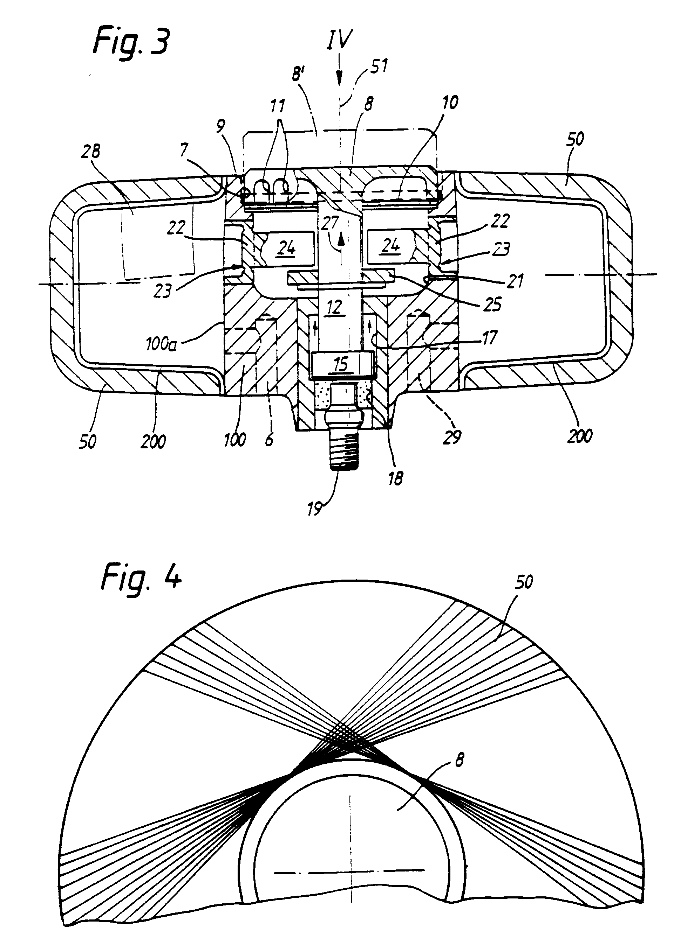

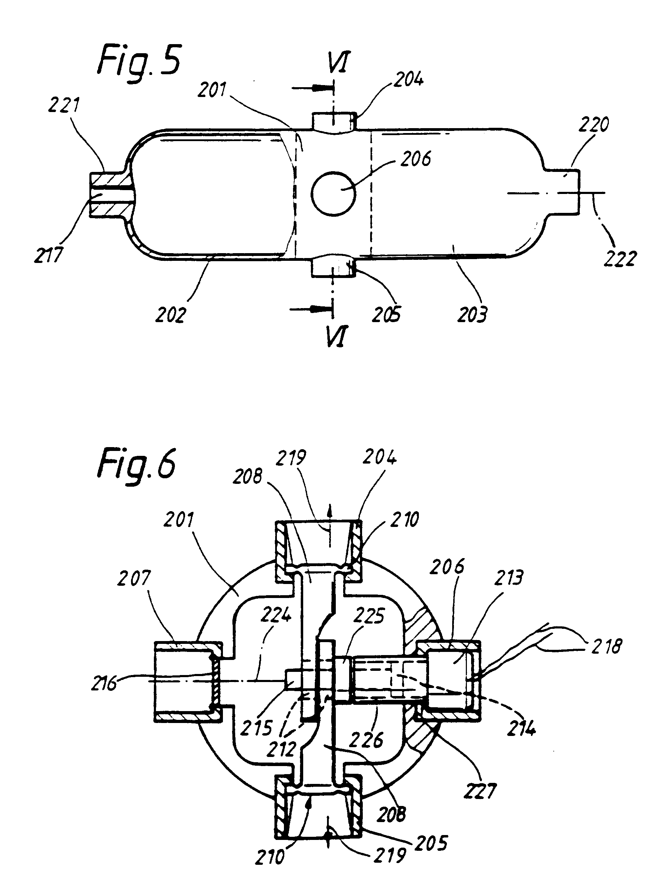

Die Fig. 3 und 4 zeigen eine Schutzeinrichtung, deren Ventilblock (100) hinsichtlich seiner Funktionsteile identisch zu dem Ventilblock (1) der Fig. 1 und 2 aufgebaut ist. Unterschiedlich ist, daß hier die Außenwandung (100a) eine zylinderförmig umlaufende Wand bildet, während die Ober- und die Unterseite flach ausgebildet sind. Der Druckbehälter (200) besteht in diesem Fall aus einem einzigen umlaufenden reifenförmigen Ring, der insgesamt von einer Faserverbundwicklung (50) eingehüllt ist.

Die anhand der Fig. 1 bereits beschriebenen inneren Funktionsteile des Ventilblockes (100) haben, weil sie identisch zu jenen der Ausführungsform der Fig. 1 und 2 ausgebildet sind, auch die gleichen Bezugszeichen erhalten. Der Hauptunterschied des Gesamtaufbaues besteht gegenüber der Ausführungsform der Fig. 1 und 2 darin, daß die Achse (51) der Kolbenstange (12) beim Ausführungsbeispiel der Fig. 3 und 4 auch die Mittelachse der gesamten Einrichtung und damit auch die Mittelachse des reifenförmigen Druckbehälters (200) mit der Faserverbundwicklung (50) ist. Eine Einrichtung, wie sie in den Fig. 3 und 4 gezeigt ist, ist besonders geeignet für den Einbau eines Air-Bag-Systems in die Nabe des Lenkrades eines Kraftfahrzeuges. Die Funktion des Ventilblockes (100) entspricht jener des Ventilblockes (1). Hierauf wird daher nicht noch einmal eingegangen.

Bei der Ausführungsform der Fig. 3 und 4 kann anstelle des für den zweiten Druckbehälter (3) der Fig. 1 vorgesehenen Befüllventiles ein Sicherheitsleckventil (29) im Ventilblock (100) vorgesehen sein, das zum Beispiel dann, wenn der Druck im Druckbehälter (22) durch Temperatureinwirkung - zum Beispiel bei einem Brand des Fahrzeuges - zu hoch wird, für ein gezieltes Ablassen des Druckgases sorgt. Natürlich kann ein solches Sicherheitsleckventil z.B. in der Form eines Schmelzventiles auch im Ventilblock (1) der Ausführungsform der Fig. 1 und 2 noch zusätzlich zu den dort vorgesehenen beiden Befüllventilen (6) vorgesehen werden.

Der in Fig. 5 dargestellte Druckbehälter (201, 202, 203) ist Teil einer Schutzeinrichtung für Insassen eines Personenkraftwagens, die vor dem Beifahrersitz des Fahrzeuginnenraums in Bereich einer unterhalb der Windschutzscheibe angebrachten Armaturentafel angeordnet ist. Die Schutzeinrichtung befindet sich beispielsweise in einem speziell dafür ausgelegten Raum der Armaturentafel oberhalb des Handschuhfachs, so daß die Funktion des Handschuhfachs nicht beeinträchtigt ist. Der Druckbehälter (201, 202, 203) bildet ein um seine Mittellängsachse (222) im wesentlichen rotationssymmetrisches hohlzylindrisches Bauteil, das an seinen gegenüberliegenden Stirnenden geschlossen ist und jeweils mit einem Anschlußstutzen (220, 221) versehen ist. Die Abmessungen des Druckbehälters (201,202,203) sind so bestimmt, daß er in den vorgesehenen Raum der Armaturentafel quer zur Fahrtrichtung des Personenkraftwagens eingepaßt werden kann. Die beiden Anschlußstutzen (220,221) dienen zur Befestigung des Druckbehälters (201,202,203). Dazu sind beispielsweise an einem entsprechenden Karosserierahmenteil im Bereich oberhalb des Handschuhfachs zwei Lagerflansche vorgesehen, die die beiden Anschlußstutzen (220,221) umgreifen und so den Druckbehälter (201, 202, 203) fixieren. Der Druckbehälter (201, 202, 203) wird von einem aufblasbaren trommelartig ausgebildeten Sack umgeben, der im Bereich der beiden Anschlußstutzen (220, 221) am Druckbehälter fixiert ist und sich rückseitig gegen eine Abstützplatte abstützt. Dieser Sack ist in seiner Ruhestellung vor dem Druckbehälter (201,202,203) zusammengefaltet und bläst sich bei einem Unfall innerhalb weniger Millisekunden in Richtung zum Beifahrer auf und schützt diesen weitgehend vor Verletzungen. Dazu ist in der den Raum für die Schutzeinrichtung abdeckenden Abdeckung der Armaturentafel eine Sollbruchstelle vorgesehen, durch die die Abdeckung zur Windschutzscheibe hin nach oben aufklappt und somit die Ausweitung des Sacks frei gibt. Das Füllvolumen des Sacks beträgt etwa 140 - 170 Liter.

In der Mitte des Druckbehälters (201,202,203) ist konzentrisch zur Mittellängsachse (222) ein zentraler,ein ringförmiges Hohlprofilteil bildender Ventilblock (201) vorgesehen, an den zwei einander gegenüberliegende halbschalenartige, beispielsweise glockenförmige Behälterteile (202,203) anschließen. Der Ventilblock (201) ist aus Aluminium geschmiedet. Die Behälterteile (202, 203) sind dünnwandig und ebenfalls aus Aluminium hergestellt. Sie sind rotationssymmetrisch und an ihren freien Stirnenden mit den Anschlußstutzen (220 und 221) versehen. Die jeweils gegenüberliegende offene Stirnseite des Behälterteils (202, 203) schließt stumpf an die jeweilige Stirnseite des Ventilblocks (201) an und ist mit diesem gasdicht verschweißt. Die gasdichte Verschweißung erfolgt beispielsweise durch eine Elektronenoder Laserstrahlschweißung.

Durch diese Verbindung ergeben die Behälterteile (202, 203) und der Ventilblock (201) einen gemeinsamen Druckbehälter. Der geschmiedete Ventilblock (201) weist unterschiedliche Wandstärken auf, die sich durch einen im wesentlichen quadratischen Innenquerschnitt bzw. durch eine im wesentlichen zylindrische Außenkontur ergeben (s.Fig.5, Fig.6). Im Bereich der vier Seiten des quadratförmigen Innenquerschnitts sind über den Umfang des Ventilblocks (201) vier rohrförmige Anschlüsse (204,205,206,207) symmetrisch verteilt angeordnet, die jeweils radial nach außen abragen. Dadurch sind die Anschlüsse (204, 205, 206, 207) im Bereich der erhöhten Wandstärke und damit erhöhter Stabilität des Ventilblocks (201) angeordnet. Zur Erhöhung seiner Festigkeit ist der Druckbehälter (201, 202, 203) mit hochfesten Aramid- oder Kohlenstoffasern umwickelt, die durch Epoxidharz in ihrer Lage auf dem Druckbehälter fixiert sind. Durch diese Faserumwicklung enthält der Druckbehälter (201, 202, 203) eine hohe Festigkeit bei gleichzeitig geringem Gewicht. Der Druckbehälter dient zur Speicherung eines Gases, beispielsweise Stickstoff, das unter einem Druck von etwa 400 bis 500 bar im Druckbehälter (201, 202, 203) gespeichert ist.

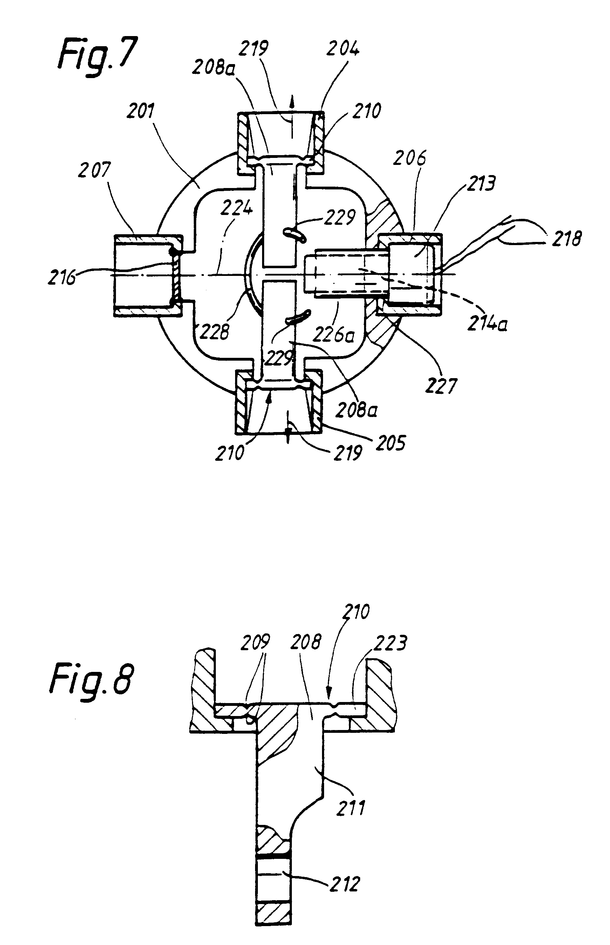

Die beiden Anschlüsse (204, 205) des Ventilblocks (201) sind einander gegenüberliegend angeordnet und mit jeweils einer in das Innere des Druckbehälters führenden Ausströmöffnung versehen. Wie insbesondere aus Fig. 6 und Fig. 8 zu erkennen ist, sind diese Ausströmöffnungen durch zwei Ventilteller (210) abgedichtet, die in die jeweilige Ausströmöffnung eingeschweißt sind. Die Ventilteller (210) liegen auf einer ringförmigen Auflageschulter des Anschlusses (204, 205) auf und sind dort gasdicht verschweißt. Sie weisen jeweils einen ins Behälterinnere ragenden Ventilschaft (208) auf, der im folgenden noch näher beschrieben wird. Jeder Ventilteller (210) ist auf seiner Ober- und/oder auf seiner Unterseite mit zwei einander gegenüberliegenden Ringnuten (209) versehen, die eine dem Durchmesser der Ausströmöffnung entsprechende ringförmige Sollbruchlinie für den Ventilteller (210) bilden.

Wie aus Fig. 6 ersichtlich ist, bilden die beiden Ventilschäfte (208) fingerartige Fortsätze, die jeweils über die Mittelebene des Druckbehälters in Richtung des gegenüberliegenden Ventiltellers (210) ragen und sich somit in ihrem Endbereich überlappen. Um eine Überlappung der Ventilschäfte (208) zu ermöglichen, verjüngen sich die Ventilschäfte (208) ab etwa einem Drittel ihrer ins Behälterinnere ragenden Länge auf die Hälfte ihrer Breite, wobei die Verjüngung derart asymmetrisch erfolgt, daß der eine Ventilschaft (208) in der Zeichnung nach Fig. 6 links der Mittellängsebene und der andere Ventilschaft (208) entsprechend gleichsinnig rechts der Mittellängsebene am benachbarten Ventilschaft (208) vorbeiragt. Die beiden Ventilschäfte (208) liegen daher im mittleren Bereich des Behälterinneren aneinander an. In seinem mit dem anderen Ventilschaft (208) überlagerten Endbereich ist jeder Ventilschaft mit einem Langloch (212) versehen, die in Richtung der Mittelachse (224) miteinander fluchten.

Durch diese beiden Langlochöffnungen (212) ragt eine Kolbenstange (215) eines Stufenkolbens (214, 215, 225) hindurch, der nachfolgend noch beschrieben wird. Koaxial zur Mittelachse (224) ist auf der in Fig. 6 rechten Seite des Ventilblocks (201) ein hohlzylindrischer Anschluß (206) angeordnet, in dem ein ein Hubelement (213) enthaltendes pyrotechnisches System befestigt ist. Dieses Hubelement (213) enthält einen elektrischen Zünder, dessen elektrische Leitungen (218) schematisch dargestellt sind. Im Hubelement ist eine geringe Menge Treibladungspulver vorgesehen, das bei der Zündung verbrennt und ein Treibgas entwickelt. Das pyrotechnische System dient zum Treiben des Stufenkolbens (214, 215, 225) in Richtung der Ventilschäfte (208), wie nachfolgend noch beschrieben wird. Das pyrotechnische System ist in sich hermetisch abgedichtet, so daß auch bei der Zündung kein Treibgas nach außen an die Umgebung oder ins Behälterinnere treten kann.

Der Boden des hohlzylindrischen Anschlusses (206) ist mit einer kreisringförmigen Anschlagschulter (227) versehen, an der das Hubelement (213) anliegt. Das Hubelement (213) dichtet den Anschluß (206) nach außen gasdicht ab. An die Anschlagschulter (227) schließt eine konzentrisch zur Mittelachse (224) in das Behälterinnere hineinragende zylinderartige Führung (226) an, in der der Stufenkolben (214, 215, 225) gleitbeweglich geführlich ist. Der Stufenkolben (214,215,225) weist zwei in Abstand zueinander angeordnete zylindrische Kolbenteile (214 und 225) auf, die mittels einer Kolbenstange (215) miteinander verbunden sind. Das Kolbenteil (225) befindet sich etwa in der Mitte des Stufenkolbens (214, 215, 225), so daß die Kolbenstange (215) vom Kolbenteil (214) aus über das Kolbenteil (225) hinausragt. Der Durchmesser des Kolbenteils (214) entspricht dem Innendurchmesser der zylindrischen Führung (226),so daß dieses Kolbenteil (214) in der zylindrischen Führung (226) gleitbeweglich ist. Der Durchmesser des Kolbenteils (225) entspricht dem Außendurchmesser der zylinderartigen Führung (226). Während sich das Kolbenteil (214) innerhalb der Führung (226) befindet, schließt das Kolbenteil (225) in der in Fig. 6 gezeigten Position direkt an das Stirnende der rohrförmigen Führung (226) an und liegt zudem auf seiner gegenüberliegenden Seite an dem Ventilschaft (208) des im Anschluß (205) befestigten Ventiltellers (210) an. Die Kolbenstange (215) des Stufenkolbens (214, 215, 225) ragt durch die beiden Langlochöffnungen (212) der beiden Ventilschäfte (208) hindurch.

Bei den Ausführungsbeispiel nach Fig. 7 sind die Ventilteller (210) in den gegenüberliegenden Anschlüssen (204, 205) mit bolzenartigen ins Behälterinnere ragenden Ventilschäften (208a) versehen. Die Ventilschäfte (208a) sind koaxial zueinander angeordnet und schließen symmetrisch zur durch die Achse (224) gekennzeichneten Mittellängsebene in geringem Abstand zueinander stirnseitig aneinander an. Im Gegensatz zum Ausführungsbeispiel nach Fig. 6 stehen sich daher die freien Stirnenden der Ventilschäfte (208a) stumpf gegenüber. Ähnlich Fig.6 weist auch das das Hubelement (213) enthaltende pyrotechnische System einen lotrecht zu den Ventilschäften (208a) auf deren Enden gerichteten bolzenartigen Kolben (214a) auf, der in einer entsprechenden Führung (226a) geführt ist. Jeder Ventilschaft (208a) ist mit einer Bohrung (229) versehen, durch die ein aus Stahl hergestellter Sicherungsring (228) hindurchragt.Aus Übersichtlichkeitsgründen ist der Sicherungsring (228) in Fig. 7 aufgebrochen dargestellt. Um die Ausströmventile (210, 208a) jedoch mit ausreichender Sicherheit im Behälterinneren zu halten, ist der Sicherungsring (228) beispielsweise starr in den Bohrungen (229) befestigt oder seine beiden Enden sind durch Verschweißen oder Verlöten miteinander verbunden.Die Funktionsweise dieser Anordnung entspricht im wesentlichen der anhand des Ausführungsbeispiels der Fig. 6 im folgenden ausführlich beschriebenen Funktion, der Kolben (214a) prallt jedoch stumpf auf die Enden der Ventilschäfte (208a) auf.

Auf der gegenüberliegenden Seite des Anschlusses (206) ist ein Anschluß (207) konzentrisch zur Mittelachse (224) vorgesehen, in dem eine Druckanzeigevorrichtung zur Anzeige des Behälterdrucks befestigt ist. Die Druckanzeigevorrichtung weist beispielsweise ein nicht gezeigtes elektronisches Meßsystem auf, an das eine Steuereinheit angeschlossen ist, die eine Signalauswertung der von der Druckanzeigevorrichtung gelieferten Drucksignale und damit eine Überprüfung des jeweils vorhandenen Behälterdrucks gestattet. Der Anschluß (207) ist gegen das Behälterinnere durch eine in den Anschluß (207) gasdicht eingescheißte Membran (216) abgedichtet, deren Verformung für das elektronische Meßsystem als Maß für den Behälterinnendruck gilt.

Der Anschlußstutzen (221) des Behälterteils (202) ist nach Fig. 5 mit einer ins Behälterinnere ragenden Gewindebohrung (217) versehen, in die ein Schmelzventil einschraubbar ist. Dieses an sich bekannte Schmelzventil dient dazu, den unter hohem Druck stehenden Behälterinhalt, beispielsweise ein Edelgas oder auch Stickstoff, bei Fahrzeugbränden kontrolliert und langsam an die Umgebung abströmen zu lassen. Diese Gewindebohrung (217) kann beispielsweise gleichzeitig als Befüllöffnung verwendet werden.

Bei einer anderen Ausführungsform ist vorgesehen, daß sich die Befüllöffnung am gegenüberliegenden Anschlußstutzen (220) des Druckbehälters (201,202,203) befindet, die nach dem Befüllvorgang mit einem Stopfen druck- und gasdicht verschlossen wird.

Nach dem elektrischen Zünden der Treibladung des Hubelementes (213) im pyrotechnischen System wird der Stufenkolben (214,215, 225) koaxial zur Mittelachse (224) ins Behälterinnere getrieben. Durch diese Belastung werden die beiden Ventilschäfte (208) der Ventilteller (210) (in Fig.6 nach links) geknickt, wodurch die Ventilteller (210) entlang ihrer Sollbruchstellen (209) brechen und sich von ihrem festgeschweißten Rand (223) lösen. In gleicher Weise erfolgt das Ausknicken der Ventilschäfte (208a), wobei diese jedoch gegenüber den Ventilschäften (208) nach Fig. 6 stabiler sind und so ein exakteres Brechen der Ventilteller (210) entlang ihrer Sollbruchstellen (209) garantieren. Beim Aufbrechen der Ventilteller (210) drehen sich diese um eine zur Zeichenebene lotrechte imaginäre Mittelachse, so daß sich kurz nach dem Aufbrechen der Sollbruchlinien (209) auf zwei gegenüberliegenden Seiten jedes Ventiltellers (210) sichelförmige Öffnungen ergeben, durch die das unter hohem Druck stehende Gas zunächst für einen kurzen Zeitraum verhältnismäßig langsam ausströmt. Die Ausströmkennlinie verläuft daher zunächst flach. Die Sollbruchlinien (209) sind so ausgelegt, daß die Ventilteller beim Aufbrechen eine eine S-schlagförmige Kennlinie bildende Ausströmcharakteristik aufweisen. Nach dem erfolgten vollständigen Abknicken der Ventilteller (210) um die imaginäre Mittelachse steigt die Kennlinie der Ausströmcharakteristik daher steil an, bis sie durch den nahezu beendeten Ausströmvorgang und den damit verbundenen Druckausgleich flacher wird und sich einer Horizontalen annähert. Die hier beschriebene Kennlinie kann in einem Druck-Zeit-Diagramm dargestellt werden. Auf der Ordinate eines solchen Diagramms wird dabei der Druck und auf der Abszisse die Zeit während des Ausströmvorgangs aufgetragen. Durch das weiche Anfahren dieser Kennlinie wird eine Überlastung des aufzublasenden Sacks zu Beginn des Ausströmvorgangs vermieden.

Der Sack bläst sich somit lediglich durch Expansion des im Druckbehälter (201, 202, 203) unter hohem Druck stehenden Gases auf. Das pyrotechnische System selbst dient lediglich zum Bewegen des Kolbens (214a) bzw. (214, 215, 224) und ist in sich abgeschlossen, so daß kein Treibgas in den Sack oder an die Umgebung abströmen kann. Durch die gegenüberliegende Anordnung von zwei Ausströmventilen, die gleichzeitig geknickt und geöffnet werden, kommt es zu einer rückstoßfreien Ausströmung des Gases in den Sack, so daß auf den Druckbehälter (201, 202, 203) beim Ausströmvorgang keine übermäßigen Belastungen auftreten. Dies ist insbesondere notwendig, da sich das Gas im Behälterinneren unter einem sehr hohen Druck befindet.

Die beschriebene Schutzeinrichtung kann neben einem Einsatz in Personenkraftwagen auch in anderen Fahrzeugen für den Personentransport eingesetzt werden. Als Beispiele hierfür seien Omnibusse und Eisenbahnwaggons genannt.

## Patentansprüche

1. Schutzeinrichtung für Insassen eines Kraftfahrzeuges, insbesondere eines Personenkraftwagens, mit einem zur Speicherung eines unter Druck stehenden Gases dienenden Druckbehälter (2, 3, 200), der über eine in der Druckbehälterwandung vorgesehene Ausströmöffnung (7) mit dem Innenraum eines durch das Gas aufblasbaren Sackes verbunden ist und aus an ein rohrförmiges Mittelstück angesetzten Behälterschalen besteht, wobei die Ausströmöffnung über wenigstens ein Ventil (22) verschließbar ist, das aus einem von einer Sollbruchstelle (23) umgebenen Wandungsstück des Druckbehälters und aus einer mit diesem Wandungsstück in Wirkverbindung stehenden Kolbenstange (12) besteht, die aus einem geschlossenen und mit einem pyrotechnischen Medium (20) gefüllten Auslösezylinder (14) einseitig herausragt und durch einen im Auslösezylinder angeordneten Kolben (15) axial aus ihrer ersten in eine zweite Endlage verschiebbar ist, wenn die Zündung des pyrotechnischen Mediums erfolgt,
**dadurch gekennzeichnet,**
daß das rohrförmige Mittelstück als ein hohler Ventilblock (1, 100,201) ausgebildet ist, der mit der Ausströmöffnung (7, 204, 205) versehen ist, daß das Wandungsstück (22, 210) Teil der Wandung des Ventilblockes und mit einem in das Innere (21) des Ventilblockes (1, 100, 201) ragenden Ansatz (24; 208, 208a) versehen ist, daß die Kolbenstange (12, 215) quer zu dem Ansatz (24, 208, 208a) im Ventilblock verschiebbar ist, und daß der Ansatz (24, 208,208a) in der Bewegungsbahn der Kolbenstange (12, 215) liegt.

2. Schutzeinrichtung nach Anspruch 1 mit einer Ausströmöffnung, die von einem kappenartigen, mit Ausströmöffnungen (11) versehenen Deckel (8) überdeckt wird,
**dadurch gekennzeichnet,**
daß die Kolbenstange (12) an ihrem von dem Kolben (15) abgewandten Ende mit dem radial von ihr abstehenden kappenartigen Deckel (8) versehen ist.

3. Schutzeinrichtung nach den Ansprüchen 1 und 2,
**dadurch gekennzeichnet,**
daß der Kolben (15) mit der Kolbenstange (12) verbunden ist und in der zweiten Endlage der Kolbenstange an der der Kolbenstange zugewandten Stirnseite des Zylinderraumes (17) des Auslösezylinders (14) anliegt.

4. Schutzeinrichtung nach den Ansprüchen 1 bis 3,
**dadurch gekennzeichnet,**
daß der Deckel (8) mit einem parallel zu der Achse der Kolbenstange (12) verlaufenden Rand (8a) versehen ist, der in der Art eines Kolbens dicht in einer zylindrischen Ausnehmung (7) des Ventilblockes (1, 100) gehalten ist, wenn die Kolbenstange (12) in der ersten Endlage steht.

5. Schutzeinrichtung nach den Ansprüchen 2 und 4,
**dadurch gekennzeichnet,**
daß die Ausströmöffnungen (11) des Deckels (8) ausschließlich in dessen Rand (8a) vorgesehen sind.

6. Schutzeinrichtung nach Anspruch 5,
**dadurch gekennzeichnet,**
daß die Ausströmöffnungen (11) als von dem freien Ende des Randes (8a) aus zum geschlossenen Deckel (8) hin verlaufende Schlitze ausgebildet sind.

7. Schutzeinrichtung nach Anspruch 6,
**dadurch gekennzeichnet,**
daß die Schlitze (11) an ihrer geschlossenen Seite eine kreisförmige Abrundung aufweisen.

8. Schutzeinrichtung nach Anspruch 4,
**dadurch gekennzeichnet,**
daß an der freien umlaufenden Stirnkante des Randes (8a) eine Lochplatte (10) befestigt ist, die eine zentrale Ausnehmung für die Kolbenstange (8) aufweist.

9. Schutzeinrichtung nach einem der Ansprüche 4 bis 8,
**dadurch gekennzeichnet,**
daß die Länge des Randes (8a), parallel zur Kolbenstange (12) gemessen, so ausgelegt ist, daß sie dem Verstellweg der Kolbenstange (12) aus der ersten in die zweite Endlage entspricht.

10. Schutzeinrichtung nach einem der Ansprüche 1 bis 9,
**dadurch gekennzeichnet,**
daß im Ventilblock (1, 100) zwei diametral gegenüberliegende Wandungsteile (22) mit fluchtend zueinander angeordneten Ansätzen (24) vorgesehen sind, deren freie Stirnseiten in einem Abstand zueinander stehen, der etwas größer als der Durchmesser der Kolbenstange (12) ist.

11. Schutzeinrichtung nach Anspruch 10,
**dadurch gekennzeichnet,**
daß jeweils angrenzend an jedes Wandungsteil (22) ein hülsenförmiger Druckbehälter (2, 3, 202, 203) anschließt, der durch die Wandung (1a, 1b,210) des Ventilblockes (1, 201) abgeschlossen ist.

12. Schutzeinrichtung nach Anspruch 11,
**dadurch gekennzeichnet,**
daß jeder Druckbehälter (2, 3, 202, 203) in etwa zylindrisch ausgebildet und mit seiner Mittellängsachse (4, 222) fluchtend zu dem anderen Druckbehälter ausgerichtet ist.

13. Schutzeinrichtung nach Anspruch 10,
**dadurch gekennzeichnet,**
daß der Ventilblock (100) von einem reifenförmigen Druckbehälter (200) umgeben ist, der konzentrisch zum Ventilblock (100) angeordnet und auf seiner offenen Innenseite durch eine zylindrische Wand (100a) des Ventilblockes (100) geschlossen ist.

14. Schutzeinrichtung nach Anspruch 11 oder 13,
**dadurch gekennzeichnet,**
daß mindestens die an dem Ventilblock (1, 100) angesetzten Druckbehälter (2, 3, 200) aus einem dünnwandigen Material bestehen, das außen durch eine die Druckbehälter einhüllende Faserverbundwicklung (5, 50) verstärkt ist.

15. Schutzeinrichtung nach den Ansprüchen 11, 13 oder 14,
**dadurch gekennzeichnet,**
daß der Ventilblock (1, 100, 201) aus einem geschmiedeten Hohlprofil mit dickerer Wandstärke als das Material der Druckbehälter (2, 3, 200, 202, 203) besteht.

16. Schutzeinrichtung nach Anspruch 15,
**dadurch gekennzeichnet,**
daß im Ventilblock (1, 100, 201) eine druck- und gasdicht verschließbare Befüllöffnung (6, 216) und/oder ein Sicherheitsventil (29) für den oder die Druckbehälter vorgesehen ist.

17. Schutzeinrichtung nach einem der Ansprüche 1 bis 16,
**dadurch gekennzeichnet,**
daß dem oder den Druckbehältern (2, 3, 200, 202,203) ein Drucksensor (28) zur ständigen Erfassung des in den Druckbehältern herrschenden Druckes zugeordnet ist.

18. Schutzeinrichtung nach Anspruch 1 und 10,
**dadurch gekennzeichnet,**
daß die Kolbenstange (12) mit einem Kragen (15, 225) versehen ist, und daß die Ansätze (24) in der Bewegungsbahn des Kragens (15) liegen.

19. Schutzeinrichtung nach Anpruch 15,
**dadurch gekennzeichnet,**
daß der Ventilblock (201) wenigstens zwei einander gegenüberliegende Anschlüsse (204, 205) aufweist, die jeweils eine mit einem Ausströmventil (210) versehene Ausströmöffnung enthalten.

20. Schutzeinrichtung nach Anspruch 19,
**dadurch gekennzeichnet,**
daß jedes Ausströmventil als ein in die Öffnung des Anschlusses 20(4, 205) eingeschweißter Ventilteller (210) ausgebildet ist, der mit einer der Größe der Ausströmöffnung entsprechenden ringförmigen Sollbruchlinie (209) versehen ist.

21. Schutzeinrichtung nach Anspruch 19,
**dadurch gekennzeichnet,**
daß die Ausströmventile (210) eine Ausströmcharakteristik mit einer flach ansteigenden, S-schlagförmigen Kennlinie aufweisen.

22. Schutzeinrichtung nach Anspruch 20,
**dadurch gekennzeichnet,**
daß an jedem Ventilteller (210) als Ansatz ein radial ins Innere des Druckbehälters (201, 202, 203) ragender Ventilschaft (208) vorgesehen ist, dessen Endbereich an dem Endbereich des Ventilschaftes (208) des gegenüberliegenden Ventiltellers (210) seitlich überlappend anliegt.

23. Schutzeinrichtung nach Anspruch 22,
**dadurch gekennzeichnet,**
daß die Endbereiche der beiden Ventilschäfte (208) mit miteinander fluchtenden Langlochöffnungen (212) versehen sind, in die die lotrecht zu den Ventilschäften (208) bewegliche Kolbenstange (214, 215, 225) eingreift.

24. Schutzeinrichtung nach Anspruch 20,
**dadurch gekennzeichnet,**
daß jeder Ventilteller (210) mit einem bolzenartigen, ins Innere des Druckbehälters (201, 202, 203) ragenden Ventilschaft (208a) versehen ist, dessen Stirnende dem Stirnende des anderen Ventilschaftes (208a) in geringem Abstand gegenüberliegt und der mit dem anderen Ventilschaft (208a) mittels eines Sicherungsringes (228) verbunden ist.

## Claims

1. A protective means for the occupants of a motor vehicle, particularly of a private car, with a pressure receiver (2, 3, 200) which serves to store a pressurised gas and which is connected to the interior of a bag which can be inflated by the gas via an outlet orifice (7) provided in the wall of the pressure container and which consists of container shells applied against a tubular central part, whereby the outflow orifice can be occluded by at least one valve (22) which consists of a part of the wall of the pressure container which is surrounded by a desired breaking point (23) and of a piston rod (12) which is operatively connected to the said wall part and which projects from one side of a closed trigger cylinder (14) filled with a pyrotechnical medium (20) and which is displaceable by a piston (15) disposed in the trigger cylinder axially out of its first and into a second extreme position when the pyrotechnical medium is ignited, characterised in that the tubular middle part is constructed as a hollow valve block (1, 100, 201) which is provided with the outlet orifice (7, 204, 205) and in that the wall piece (22, 210) is a part of the wall of the valve block and is provided with an extension part (24, 208, 208a) which projects into the interior (21) of the valve block (1, 100, 210) and in that the piston rod (12, 215) is displaceable within the valve block and transversely to the extension piece (24, 208, 208a) and in that the extension piece (24, 208, 208a) lies in the path of movement of the piston rod (12, 215).

2. A protective means according to claim 1 with an outlet orifice covered by a cap-like cover (8) provided with outflow orifices (11), characterised in that the piston rod (12) has at its end remote from the piston (15) a cap-like cover (8) which projects radially from it.

3. A protective means according to claims 1 and 2, characterised in that the piston (15) is connected to the piston rod (12) and, in the second extreme position of the piston rod, bears on that end face of the cylinder space (17) of the trigger cylinder (14) which is towards the piston rod.

4. A protective means according to claims 1 to 3, characterised in that the cover (8) is provided with, extending parallel with the axis of the piston rod (12), an edge (8a) which in the manner of a piston is supported tightly in a cylindrical recess (7) in the valve block (1, 100) when the piston rod (12) is in the first extreme position.

5. A protective means according to claims 2 and 4, characterised in that the outflow orifices (11) in the cover (8) are provided solely in the edge (8a) thereof.

6. A protective means according to claim 5, characterised in that the outflow orifices (11) are constructed as slots extending from the free end of the edge (8a) to the closed cover (8).

7. A protective means according to claim 6, characterised in that the slots (11) have a circular rounding at their closed side.

8. A protective means according to claim 4, characterised in that fixed to the free encircling end edge of the rim (8a) is a perforated plate (10) which has a central aperture for the piston rod (8).

9. A protective means according to one of claims 4 to 8, characterised in that the length of the rim (8a), measured parallel with the piston rod (12), is such that it corresponds to the displacement path of the piston rod (12) out of the first and into the second extreme position.

10. A protective means according to one of claims 1 to 9, characterised in that in the valve block (1, 100) there are two diametrically opposite wall parts (22) with, aligned in respect of one another, extension pieces (24) the free end faces of which are at a distance from each other which is somewhat greater than the diameter of the piston rod (12).

11. A protective means according to claim 10, characterised in that in each case there is adjacent each wall part (22) a sleeve-like pressure receiver (2, 3, 202, 203) which is occluded by the walls (1a, 1b, 210) of the valve block (1, 210).

12. A protective means according to claim 11, characterised in that each pressure container (2, 3, 202, 203) is substantially cylindrical in construction and has its median longitudinal axis (4, 222) aligned flush with the other pressure receiver.

13. A protective means according to claim 10, characterised in that the valve block (100) is enclosed by a tyre-shaped pressure receiver (200) which is disposed concentrically in relation to the valve block (100) and which is on its open inside occluded by a cylindrical wall (100a) of the valve block (100).

14. A protective means according to claim 11 or 13, characterised in that at least the pressure receivers (2, 3, 200) applied to the valve block (1, 100) consists of thin-gauge material which is outwardly reinforced by a bonded fibre winding (5, 50) which outwardly encloses the pressure receivers.

15. A protective means according to claims 11, 13 or 14, characterised in that the valve block (1, 100, 201) consists of a forced hollow profile having a thicker wall thickness than the material of the pressure receiver (2, 3, 200, 202, 203).

16. A protective means according to claim 15, characterised in that there is in the valve block (1, 100, 210) a pressure-tightly and gas-tightly occludable filling aperture (6, 216) and/or a safety valve (29) for the pressure container or containers.

17. A protective means according to one of claims 1 to 16, characterised in that there is associated with the pressure receivers (2, 3, 200, 202, 203) a pressure sensor (28) for constantly ascertaining the pressure prevailing at the pressure receivers.

18. A protective means according to claim 1 and 10, characterised in that the piston rod (12) is provided with a collar (15, 225) and in that the projections (24) lie in the path of movement of the collar (15).

19. A protective means according to claim 15, characterised in that the valve block (201) comprises at least two oppositely disposed connections (204, 205) each of which contains an outlet orifice provided with an outflow valve (210).

20. A protective means according to claim 19, characterised in that each outflow valve is constructed as a valve plate (210) welded into the aperture in the connection 20 (4, 205) and which is provided with an annular design fracture line (209) corresponding to the size of the outflow orifice.

21. A protective means according to claim 19, characterised in that the outflow valves (210) have an outflow characteristic with a slightly rising S-shaped characteristic.

22. A protective means according to claim 20, characterised in that there is provided on each valve plate (210) as an extension piece a valve stem (208) projecting radially into the interior of the pressure receiver (201, 202, 203) and of which the end portion bears on the end portion of the valve stem (208) of the oppositely disposed valve plate (210) in such a way that it overlaps laterally.

23. A protective means according to claim 22, characterised in that the end portion of the two valve stems (208) are provided with mutually aligned longitudinal apertures (212) engaged by the piston rod (214, 215, 225) which is adapted for movement at right-angles to the valve stems (208).

24. A protective means according to claim 20, characterised in that each valve plate (210) is provided with a bolt-like valve stem (208a) projecting into the interior of the pressure receiver (201, 202, 203) and of which the end is opposite and at a slight distance from the end of the other valve stem (208a) and which is connected to the other valve stem (208a) by means of a locking ring (228).

## Revendications

1. Dispositif de protection pour occupants d'un véhicule, notamment d'une voiture de tourisme, comportant un récipient (2, 3, 200), servant au stockage d'un gaz sous pression, et relié par l'intermédiaire d'un orifice de sortie d'écoulement (7) prévu dans la paroi du récipient, avec le volume intérieur d'un sac gonflable par le gaz et qui se compose de coques réceptives disposées sur une pièce centrale de forme tubulaire, l'orifice de sortie d'écoulement pouvant être obturé par l'intermédiaire d'au moins une soupape (22), qui se compose d'un élément de paroi, entouré par une zone de rupture imposée (23), du récipient sous pression et d'une tige de piston (12) reliée fonctionnellement à cet élément de paroi et faisant saillie d'un côté d'un cylindre de déclenchement (14), fermé, rempli d'un agent pyrotechnique (20) et déplaçable, par un piston (15) disposé dans ce cylindre de déclenchement, axialement de sa première position limite jusque dans une seconde position limite lorsque l'inflammation de l'agent pyrotechnique est effectuée, caractérisé en ce que la pièce centrale de forme tubulaire est agencée comme un corps de soupape creux (1, 2, 201), qui est pourvu de l'orifice de sortie d'écoulement (7, 204, 205), en ce que l'élément de paroi (22, 210) fait partie de la paroi du corps de soupape et est pourvu d'un appendice (24, 208, 208a) pénétrant à l'intérieur du corps de soupape (1, 100, 201), en ce que la tige de piston (12, 215) est déplaçable dans le corps de soupape perpendiculairement à l'appendice (24, 208, 208a) et en ce que l'appendice (24, 208, 208a) est situé dans la voie de déplacement de la tige de piston (12, 215).

2. Dispositif de protection selon la revendication 1, comportant un orifice de sortie d'écoulement, qui est recouvert par un couvercle (8) en forme de chapeau pourvu d'orifices de sortie d'écoulement (1), caractérisé en ce que la tige de piston (12) est pourvue, à son extrémité opposée au piston (15), du couvercle (8) en forme de chapeau faisant saillie radialement de ladite tige.

3. Dispositif de protection selon les revendications 1 et 2, caractérisé en ce que le piston (15) est relié à la tige de piston (12) et il s'applique, dans la seconde position limite de la tige de piston, contre le côté frontal, dirigé vers la tige de piston, du volume cylindrique (17) du cylindre de déclenchement (14).

4. Dispositif de protection selon les revendications 1 à 3, caractérisé en ce que le couvercle (8) est pourvu d'un bord (8a), orienté parallèlement à l'axe de la tige de piston (12) et qui est maintenu, à la manière d'un piston et de façon étanche, dans un évidement cylindrique (7) du corps de soupape (1, 100) quand la tige de piston (12) est située dans la première position limite.

5. Dispositif de protection selon les revendications 2 et 4, caractérisé en ce que les orifices de sortie d'écoulement (11) du couvercle (8) sont situés exclusivement dans son bord (8a).

6. Dispositif de protection selon la revendication 5, caractérisé en ce que les orifices de sortie d'écoulement sont agencés comme des fentes s'étendant depuis l'extrémité libre du bord (8a) vers le couvercle fermé (8).

7. Dispositif de protection selon la revendication 6, caractérisé en ce que les fentes (11) comportent, sur leur côté fermé, un arrondi de forme circulaire.

8. Dispositif de protection selon la revendication 4, caractérisé en ce que sur le chant frontal périphérique libre du bord (8a) est fixée une plaque perforée (10) qui comporte un trou central pour la tige de piston (8).

9. Dispositif de protection selon une des revendications 4 à 8, caractérisé en ce que la longueur du bord (8a), mesurée parallèlement à la tige de piston (12), est choisie de telle sorte qu'elle corresponde à la course de déplacement de la tige de piston (12) de la première jusque dans la seconde position limite.

10. Dispositif de protection selon une des revendications 1 à 9, caractérisé en ce qu'il est prévu dans le corps de soupape (1, 100) deux parties de paroi (22) situées dans des positions diamétralement opposées et comportant des appendices (24) disposés mutuellement en coïncidence et dont les côtés frontaux libres sont espacés l'un de l'autre d'une distance qui est un peu plus grande que le diamètre de la tige de piston (12).

11. Dispositif de protection selon la revendication 10, caractérisé en ce qu'il est prévu dans une zone adjacente à chaque partie de paroi (22) un récipient sous pression respectif (2, 3, 202, 203) en forme de cuvette, qui est obturé par la paroi (1a, 1b, 210) du corps de soupape (1, 201).

12. Dispositif de protection selon la revendication 11, caractérisé en ce que chaque récipient sous pression (2, 3, 202, 203) est réalisé avec une forme à peu prés cylindrique et comporte un axe longitudinal central (4, 222) coïncidant avec celui de l'autre récipient sous pression.

13. Dispositif de protection selon la revendication 10, caractérisé en ce que le corps de soupape (100) est entouré par un récipient sous pression (200) en forme de bandage, qui est disposé concentriquement au corps de soupape (100) et qui est fermé, sur son côté intérieur ouvert, par une paroi cylindrique (100a) du corps de soupape (100).

14. Dispositif de protection selon la revendication 11 ou 13, caractérisé en ce qu'au moins les récipients sous pression (2, 3, 200), disposés sur le corps de soupape (1, 100), se composent d'une matière formant une paroi mince, qui est renforcée extérieurement par un enroulement composite fibreux (5, 50) enveloppant le récipient sous pression.

15. Dispositif de protection selon les revendications 11, 13 ou 14, caractérisé en ce que le corps de soupape (1, 100, 201) se compose d'un profilé creux, forgé, ayant une épaisseur de paroi plus grande que la matière des récipients sous pression (2, 3, 200, 202, 203).

16. Dispositif de protection selon la revendication 15, caractérisé en ce qu'il est prévu dans le corps de soupape (1, 100, 201) un orifice de remplissage (6, 216), étanche à la pression et au gaz et pouvant être obturé, et/ou une soupape de sécurité (29) pour le ou les récipients.

17. Dispositif de protection selon une des revendications 1 à 16, caractérisé en ce qu'un capteur de pression (28) est associé au ou aux récipients sous pression (2, 3, 200, 202, 203) pour un captage permanent de la pression régnant dans les récipients sous pression.

18. Dispositif de protection selon les revendications 1 et 10, caractérisé en ce que la tige de piston (12) est pourvue d'un collet (15, 225) et en ce que les appendices (24) sont situés dans la voie de déplacement du collet (15).

19. Dispositif de protection selon la revendication 15, caractérisé en ce que le corps de soupape (201) comporte au moins deux raccords (204, 205), situés dans des positions mutuellement opposées et comportant chacun un orifice de sortie d'écoulement pourvu d'une soupape de sortie d'écoulement (210).

20. Dispositif de protection selon la revendication 19, caractérisé en ce que chaque soupape de sortie d'écoulement est agencée comme un plateau de soupape (210) fixé par soudage dans l'orifice du raccord (204, 205) et qui est pourvu d'une ligne annulaire de rupture imposée (209) correspondant à la grandeur de l'orifice de sortie d'écoulement.

21. Dispositif de protection selon la revendication 19, caractérisé en ce que les soupapes de sortie d'écoulement (210) comportent une courbe caractéristique de sortie d'écoulement à faible pente de croissance et à profil en forme de S.

22. Dispositif de protection selon la revendication 20, caractérisé en ce qu'il est prévu sur chaque plateau de soupape (210), comme appendice, une tige de soupape (208) faisant saillie radialement à l'intérieur du récipient sous pression (201, 202, 203) et dont une zone extrême s'applique contre la zone extrême de la tige de soupape (208) du plateau de soupape opposé (210) en la recouvrant latéralement.

23. Dispositif de protection selon la revendication 22, caractérisé en ce que les zones extrêmes des deux tiges de soupapes (208) sont pourvues d'ouvertures (212) en forme de trous oblongs situées mutuellement en coïncidence et dans lesquelles s'engage la tige de piston (214, 215, 225) mobile perpendiculairement aux tiges de soupapes (208).

24. Dispositif de protection selon la revendication 20, caractérisé en ce que chaque plateau de soupape (210) est pourvu d'une tige de soupape (208 a) en forme de broche, pénétrant à l'intérieur du récipient sous pression (201, 202, 203) et dont l'extrémité frontale est située en regard et à une faible distance de l'extrémité frontale de l'autre tige de soupape (208a), , en étant reliée à l'autre tige de soupape 208a) au moyen d'un jonc de fixation (228).
